Europäisches Patentamt

European Patent Office

Office européen des brevets

(19)

(11) Veröffentlichungsnummer : **0 009 118**
**B2**

(12) **NEUE EUROPÄISCHE PATENTSCHRIFT**

(45) Veröffentlichungstag der neuen Patentschrift :
30.07.86

(51) Int. Cl.⁴ : **B 29 B 7/76, B 29 C 67/20**

(21) Anmeldenummer : 79102962.2

(22) Anmeldetag : 16.08.79

(54) Verfahren und Vorrichtung zum Herstellen von Artikeln, die aus füllstoffhaltigem Chemiewerkstoff bestehen.

(30) Priorität : 28.08.78 DE 2837425

(43) Veröffentlichungstag der Anmeldung :
02.04.80 Patentblatt 80/07

(45) Bekanntmachung des Hinweises auf die Patenterteilung : 26.05.82 Patentblatt 82/21

(45) Bekanntmachung des Hinweises auf die Entscheidung
über den Einspruch : 30.07.86 Patentblatt 86/31

(84) Benannte Vertragsstaaten :
BE CH DE FR GB IT NL SE

(56) Entgegenhaltungen :
DE-A- 1 454 898
DE-A- 1 729 531
DE-A- 1 778 053
DE-A- 2 227 559
DE-A- 2 613 771
DE-A- 2 631 588
DE-A- 2 649 602
DE-B- 1 152 532
DE-B- 1 903 243
DE-C-  836 249
MODERN PLASTICS INTERNATIONAL, Band 7, September 1977, Lausanne, KRAUSS-MAFFEI AG, Kunst-
stoffverarbeitungsmaschine-Abteilung "RIM urethanes get boost from new technique, for filling, reinforcement" Seiten 14 bis 15

(73) Patentinhaber : BAYER AG
Konzernverwaltung RP Patentabteilung
D-5090 Leverkusen 1 Bayerwerk (DE)

(72) Erfinder : Schulte, Klaus, Ing.grad.
Opladener Strasse 5
D-5090 Leverkusen (DE)
Erfinder : Ersfeld, Heinrich
Biesenbach 11
D-5090 Leverkusen 31 (DE)
Erfinder : Wirtz, Hans, Dr.
Am Thelenhof 17
D-5090 Leverkusen (DE)

**Beschreibung**

Die Erfindung bezieht sich auf ein Verfahren und eine Vorrichtung zum Herstellen von Artikeln, die aus füllstoffhaltigem Chemiewerkstoff bestehen, wobei fließfähige Reaktionskomponenten unter vorgegebenen Injektionsdrücken in eine Mischzone injiziert werden und das Reaktionsgemisch anschließend in ein Formwerkzeug eingebracht wird.

Nach einem solchen Verfahren lassen sich zellige Stoffe, wie Weich-, Halbhart-, Hart- oder Strukturschaumstoff, z. B. auf Basis Polyurethan oder Isocyanurat, aber auch nichtzellige Stoffe, wie Elastomere, herstellen.

Das Einarbeiten von Füllstoffen z. B. bei der Herstellung von Artikeln aus Schaumstoffen, insbesondere solcher aus Polyurethanschaumstoffen, dient der Erzielung bestimmter Eigenschaften des Fertigproduktes oder der Verwertung von Abfallstoffen oder auch der Senkung der Materialkosten. Gebräuchliche Füllstoffe sind beispielsweise Zement, Kalk oder Kreide, Bariumsulfat, organische oder anorganische Fasern, insbesondere Kurzglasfasern und gemahlene Glasfasern, sowie Schaumstoffpulver, das aus zerkleinerten Schaumstoffabfällen hergestellt worden ist.

Es sind bereits Kolben-Zylinder-Einheiten bekannt, die nach dem Verdrängerprinzip arbeiten und mit denen Reaktionskomponenten in die Mischkammer dosiert bzw. im Kreislauf gefahren werden. Diese Vorrichtungen arbeiten nach dem Hochdruckprinzip, d. h. mit Einspritzdrücken über etwa 20 bar. Das Hochdruckprinzip ist besonders geeignet und sogar erforderlich zum Einbringen großer Gemischmengen innerhalb eines kurzen Zeitraumes in den Hohlraum eines Formwerkzeuges. Es muß insbesondere dann angewendet werden, wenn es sich um schnell reagierende Komponenten handelt. Die Verarbeitung von füllstoffhaltigen Komponenten mit diesen vorbekannten Kolben-Zylinder-Einheiten verursacht Schwierigkeiten, weil auch das gesamte Kreislaufsystem aus verschleißfreiem Material gefertigt sein müßte, wobei es fraglich ist, ob die in den Mischköpfen eingesetzten, teilweise recht komplizierten Steuerorgane, wie Steuerkolben mit Rücklaufnuten, in den erforderlichen Passungen aus solchen Materialien unter vertretbaren Kosten herstellbar sind.

Es sind auch Verfahren bekannt, die nach dem sogenannten Niederdruckprinzip arbeiten, bei denen der Füllstoff in trockenem Zustand zusammen mit dem Reaktionsgemisch in eine Rührwerkskammer eingebracht wird, um dort miteinander vermischt zu werden. Die Anwendung dieses Verfahrens ist jedoch nur bei der Verarbeitung langsam reagierender Systems möglich.

Aus der DE-A-2 649 602 sind ein Verfahren und eine Vorrichtung der eingangs genannten Art zum Vermischen von mindestens zwei fluiden Bestandteilen bekannt, die als Gemisch einem Formwerkzeug zugeführt werden sollen. Sowohl dieses Verfahren als auch die Vorrichtung sind jedoch nicht für die Verarbeitung von Füllstoffen geeignet, da aufgrund des Verfahrensablaufes bzw. der Konstruktion die Vorrichtung durch die abrasive Wirkung der Füllstoffe zu schnell verschleißen würde.

Es gilt die Aufgabe zu lösen, ein Verfahren und eine Vorrichtung zu schaffen, mit denen fließfähige, füllstoffhaltige, schnell reagierende Komponenten mit geringem maschinellen Aufwand und Verschleiß für das Herstellen von füllstoffhaltigen Chemiewerkstoffartikeln, insbesondere Schaumstoffartikeln, vermischt werden können.

Die erfindungsgemäßen Verfahrensschritte zur Lösung dieser Aufgabe sind darin zu sehen, daß mindestens eine der Reaktionskomponenten vorher mit Füllstoff beladen und in einer für mehrere Formwerkzeugfüllungen ausreichenden Menge zwischengelagert wird und dabei auf diese zwischengelagerte Menge auch während der Pausenzeiten, in denen keine Vermischung stattfindet, ein dem Injektionsdruck entsprechender Druck ausgeübt wird, wobei dieser Druck mittels einer Hydraulikflüssigkeit aufgebracht wird, deren Strom synchron mit dem Eintrittszeitpunkt und Absperrzeitpunkt der Reaktionskomponente in die Mischzone gesteuert wird, indem der Hydraulikflüssigkeitsstrom kontinuierlich erzeugt und sein Druck dauernd auf die füllstoffhaltige Reaktionskomponente einwirken gelassen wird und diese während der Mischzeiten in die Mischzone fördert ; und indem während der Pausenzeiten vom Absperrzeitpunkt bis zum Eintrittszeitpunkt der füllstoffhaltigen Reaktionskomponente in die Mischzone, der erzeugte Hydraulikflüssigkeitsstrom rückgeführt wird.

Dadurch wird erreicht, daß die füllstoffhaltige Reaktionskomponente nicht im schädlichen Kreislauf gefördert werden muß, der sowohl Verschleiß als auch Entmischungen verursachen würde. Da die füllstoffhaltige Reaktionskomponente dauernd unter dem Injektionsdruck steht, ist es möglich, mit entsprechend hoher Geschwindigkeit zu dosieren, wobei bei den möglichen kurzen Wegen der Verschleiß gering gehalten werden kann. Es versteht sich, daß der Druck der Hydraulikflüssigkeit auf dem Niveau des Injektionsdruckes liegen oder auch einem vorgegebenen Verhältnis entsprechend über- oder untersetzt sein kann. Die Maßnahme, den Hydraulikflüssigkeitsstrom in der erfindungsgemäßen Weise zu kontrollieren, hat den besonderen Vorteil, daß im Zusammenwirken mit dem anliegenden Injektionsdruck genau synchron mit dem Öffnen der Einspritzöffnungen der Rücklauf der Hydraulikflüssigkeit unterbrechbar ist, so daß der mittels der Hydraulikflüssigkeit ausgeübte Druck die füllstoffhaltige Reaktionskomponente in die Mischzone fördert. Exakt mit dem Öffnen und Schließen der Einspritzöffnungen wird also gleichzeitig der Dosiervorgang begonnen bzw. beendet.

Beim Gegenstand gemäß DE-A-2 649 602 werden zwar beide Komponenten vor dem Einbringen in eine Mischzone in der Menge jeweils einer Formfüllung zwischengelagert und unter einem dem Injektionsdruck im wesentlichen entsprechenden Druck gehalten. Dieser Druck wird mittels eines Gaspolsters aufgebracht. Die Beladung mindestens einer Reaktionskomponente ist nicht vorgesehen. Wegen der Kompressibilität der Gase treten aber insbesondere zu Beginn und Ende des Mischvorganges unkontrollierbare Unregelmäßigkeiten in den Komponentenströmen auf, welche eine ungenügende Vermischung zur Folge haben.

Da die Zwischenbehälter vor jedem einzelnen Formfüllvorgang erst wieder gefüllt werden müssen, arbeitet diese Vorrichtung sehr zeitaufwendig.

Die Vorrichtung zur Durchführung des Verfahrens geht aus von Vorratsbehältern für Reaktionskomponenten, von denen Dosierpumpen enthaltende Zuleitungen über von einem Steuerorgan kontrollierbare Einspritzöffnungen in die Mischkammer eines Mischkopfes münden, an deren Auslaßöffnung ein Formwerkzeug anschließbar ist wobei mindestens die in der Zuleitung für die füllstoffhaltige Reaktionskomponente angeordnete Dosierpumpe als hydraulische Kolben-Zylinder-Einheit ausgebildet ist, in deren Verdrängerkammer der vom Vorratsbehälter kommende Abschnitt der Zuleitung mündet und von der ein zweiter Abschnitt der Zuleitung zur Einspritzöffnung der Mischkammer abführt ; und wobeider Kolben der Kolben-Zylinder-Einheit in einer Hydraulikkammer geführt ist, in die eine von einem Vorratsbehälter abführende Hydraulikzuleitung, in der eine Dosierpumpe angeordnet ist, mündet.

Das Neue ist darin zu sehen, daß von der Hydraulikzuleitung zwischen Dosierpumpe und Hydraulikkammer eine Rücklaufleitung, die ein Drosselventil enthält, abzweigt und zum Vorratsbehälter zurückführt, wobei die Rücklaufleitung ein Absperrorgan aufweist, das mit dem Steuerorgan über eine Zwangssteuerung verbunden ist.

Dadurch wird erreicht, daß das Drosselventil in der Rücklaufleitung für die Einhaltung eines Druckes sorgt, der dem Injektionsdruck entspricht bzw. in einem entsprechenden Über- oder Untersetzungsverhältnis dazu steht. Dieser Druck wird durch dauerndes Fördern der Dosierpumpe erzeugt. Die Kontrolle des Hydraulikflüssigkeitsstromes durch Umschalten auf Vorlauf oder Rücklauf in unmittelbarer Abhängigkeit vom Steuerorgan der Einspritzöffnungen bewirkt ein exaktes Dosieren ohne ingendwelche Übergangsstörungen zwischen diesen beiden Verfahrensschritten.

Die andere, füllstoffreie Komponente kann in der üblichen Weise über Zahnradpumpen, Reihenkolbenpumpen, Radial- oder Axialkolbenpumpen dosiert werden. Ihre Dosierung ist aber ebenfalls mit einer Kolben-Zylinder-Einheit möglich.

Nach einer besonderen Ausführungsform der erfindungsgemäßen Vorrichtung ist als Zwangssteuerung das Absperrorgan vom Steuerorgan gebildet, indem das Steuerorgan aus einem Gehäuse mit darin geführtem Kolben besteht, wobei der Kolben der Steuerung der Einspritzöffnung dient, während sein Schaft einen Überbrückungskanal aufweist, mittels dem die durch das Gehäuse hindurchgeführte Rücklaufleitung verbindbar bzw. unterbrachbar ist.

Der Vorteil dieser Ausführungsform liegt in der Einheit von Absperrorgan und Steuerorgan, so daß die Steuerung der füllstoffhaltigen Komponente mit der Steuerung der Hydraulikflüssigkeit zwangsläufig gekoppelt ist.

Gemäß einer besonderen alternativen Ausführungsform ist in der Rücklaufleitung ein gesondertes Absperrorgan angeordnet, und als Zwangssteuerung ist dem Steuerorgan ein elektronischer Annäherungsschalter zugeordnet, der mit einem Impulsumsetzer verbunden ist, der mit einem Steuerorgan des Absperrorgans in Verbindung steht.

Diese Ausführungsform erlaubt konstruktiv die räumliche Trennung von Mischkopf und Absperrorgan, was bauliche und wartungstechnische Vorteile bringt.

Solche Annäherungsschalter schalten berührungslos. Ihr Schaltbefehl kann zur Steuerung der Maschinenelektronik, eines Relais usw. dienen. Sie sind beispielsweise in dem Prospekt K 78 der Firma Selectron Lyss AG, Industrielle Elektronik, CH-3250 Lyss, unter dem Titel « SELEPROX® Annäherungsschalter » beschrieben.

Impulsumsetzer sind in vielen Ausführungsformen auf dem Markt, und als Absperrorgan eignen sich besonders elektronisch betätigbare Wegeventile, wie beispielsweise das Wegeventil Type WG S 2-3, ersichtlich aus der Druckschrift 5 000 (März 1971) der Firma HAWE, Heilmeier et Weinlein, Neumarkter Straße 26, D-8 000 München 80.

Vorzugsweise ist zwischen Impulsumsetzer und dem Steuerglied des Absperrorgans ein einstellbares Zeitverzögerungsglied angeordnet.

Dies ist insbesondere vorteilhaft, wenn auch die zweite oder auch weitere Komponenten in der gleichen Weise wie die füllstoffhaltige steuerbar sind. Ist nämlich beispielsweise eine der Reaktionskomponenten höher viskos als die andere, so läßt sich die Wirkung des hydraulischen Dosiersystems für die weniger viskose Komponente bei entsprechender Einstellung des Zeitverzögerungsgliedes, das beispielsweise aus einem Zeitrelais besteht, derart verzögern, daß beide Komponenten absolut zeitsynchron in die Mischkammer eintreten.

Die erfindungsgemäße Vorrichtung ist in der Zeichnung in zwei Ausführungsbeispielen rein schematisch dargestellt und nachstehend näher erläutert. Es zeigen :

Fig. 1 das erste Ausführungsbeispiel, worin das Steuerorgan für die Reaktionskomponente gleichzeitig das Absperrorgan für die Rücklaufleitung der Hydraulikflüssigkeit darstellt, und

Fig. 2 das zweite Ausführungsbeispiel, worin in Abhängigkeit vom Steuerorgan für beide Reaktionskomponenten die Absperrorgane für die Rücklaufleitungen der Hydraulikflüssigkeit elektronisch betätigt werden.

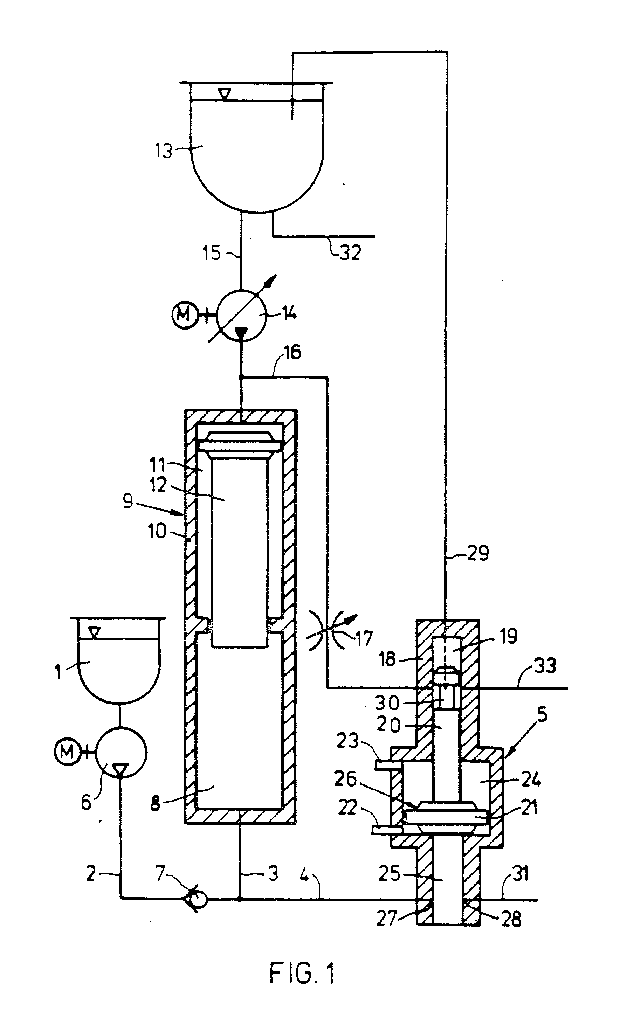

In Fig. 1 ist ein Vorratsbehälter 1 für eine füllstoffhaltige Reaktionskomponente über eine aus drei Abschnitten 2, 3, 4 bestehende Zuleitung indirekt mit einem Mischkopf 5 verbunden. Der Abschnitt 2 enthält eine Dickstoffpumpe 6 und eine Rückstromsperre 7.

Hinter dieser zweigt der Abschnitt 3 ab und mündet in die Verdrängerkammer 8 einer Kolben-Zylinder-Einheit 9. Zwischen der Abzweigstelle und dem Mischkopf 5 erstreckt sich der dritte Abschnitt 4. Das Gehäuse 10 dieser Einheit 9 enthält noch eine Hydraulikkammer 11, in der ein Kolben 12 geführt ist. In diese Kammer 11 mündet eine von einem Hydraulikflüssigkeitsvorrarsbehälter 13 kommende, eine Hochdruckdosierpumpe 14 enthaltende Hydraulikzuleitung 15. Von dieser Hydraulikzuleitung 15 zweigt zwischen Hochdruckdosierpumpe 14 und Hydraulikkammer 11 eine Rücklaufleitung ab, deren erster Abschnitt 16 ein Drosselventil 17 enthält und in das Gehäuse 18 des Mischkopfes 5 führt und an einer Gehäusebohrung 19 endet. Darin gleitet der Schaft 20 eines aus einem Hydraulikkolben 21, der in einer Zu- und Ableitungen 22, 23 aufweisenden Hydraulikkammer 24 geführt ist, und einem Steuerkolben 25 bestehenden Steuerorgans 26. Der Steuerkolben 25 ist in der Mischkammerbohrung geführt, füllt diese in der dargestellten Stellung aus und verschließt die Einspritzöffnungen 27, 28.

Der zweite Abschnitt 29 der Rücklaufleitung führt vom Gehäuse 18 (in der Zeichnung von der Rückseite des Gehäuses 18) in den Vorratsbehälter 13 zurück. In der gezeigten Stellung des Steuerorgans 26 verbindet ein in seinem Schaft 20 vorgesehener, als Ringnut ausgebildeter Überbrückungskanal 30 die beiden Abschnitte 16 und 29.

Das Dosiersystem für die zweite Reaktionskomponente ist in gleicher Weise aufgebaut, jedoch nur mit der Zuleitung 31 für die Komponente, der Hydraulikflüssigkeitszuleitung 32 und mit dem ersten Abschnitt 33 der hydraulischen Rücklaufleitung angedeutet. Ihr zweiter Abschnitt ist mit dem Abschnitt 29 identisch.

Das Dosiersystem für die zweite oder jede weitere füllstofffreie Komponente kann aber auch in der üblichen Weise, mit oder ohne Komponentenkreislauf, über Dosierkolbenpumpen, Dosierzahnradpumpen oder dergleichen erfolgen.

Die Arbeitsweise dieser Vorrichtung gemäß Fig. 1 mit identischen Dosiersystemen für beide Reaktionskomponenten sei an einem Durchführungsbeispiel veranschaulicht :

Der Vorratsbehälter 1 ist mit einem Polyol gefüllt, das 20 Gewichtsprozent Glasfaserpulver enthält. Im nicht-dargestellten zweiten Vorratsbehälter ist ein Isocyanat gelagert. Die Isocyanatkomponente wird in der gleichen Weise zum Mischkopf gefördert wie die Polyolkomponente ; ihr Förderweg ist deshalb nicht näher beschrieben.

Nun arbeitet die Dickstoffförderpumpe 6 bei abgestellter Hochdruckdosierpumpe 14, so daß in der Kolben-Zylinder-Einheit 9 der Kolben 12 zurückgeschoben wird und die Verdrängerkammer 8 sich mit der füllstoffhaltigen Polyolkomponente füllt. Zu diesem Zeitpunkt verschließt der Steuerkolben 25 die Einspritzöffnungen 27, 28 der Mischkammer. Ist die Verdrängerkammer 8 gefüllt, so schaltet die Dickstoffförderpumpe 6 ab. Gleichzeitig beginnt die Hochdruckdosierpumpe 14 zu arbeiten, pumpt Hydraulikflüssigkeit aus dem Vorratsbehälter 13 über die Zuleitung 15 und beaufschlagt in der Hydraulikkammer 11 den Kolben 12. Da aber die Einspritzöffnung 27 noch verschlossen ist und ein Rückschlagventil 7 ein Rückströmen in die Zuleitung 2 verhindert, baut sich in der Polyolkomponente der Injektionsdruck von 100 bar auf. Er wird eingestellt mittels des in der Rücklaufleitung 16 angeordneten Drosselventils 17. Da sich die hydraulisch beaufschlagbare Fläche des Kolbens 12 und seine von der Komponente beaufschlagte Fläche wie 2 : 1 verhalten, beträgt bei dem gewünschten Injektionsdruck von 100 bar der am Drosselventil eingestellte Druck der Hydraulikflüssigkeit 50 bar. Nachdem nun der Injektionsdruck aufgebaut ist, ist die Vorrichtung betriebsbereit und das Steuerorgan 26 wird in Stellung « Mischen » gebracht ; d. h. der Kolben 25 fährt zurück, so daß sich die Mischkammer bildet und beide Komponenten durch die Einspritzöffnungen 27, 28 in die Mischkammer eintreten können. Da der Schaft 20, der den Überbrückungskanal 30 aufweist, über den bisher die überschüssige Hydraulikflüssigkeit aus den Abschnitten 16 und 33 zum Abschnitt 29 strömte, mit dem Kolben 25 starr verbunden ist, gelangt der Überbrückungskanal 30 außerhalb des Mündungsbereichs der Rücklaufleitungsabschnitte 16, 29, 33. Damit wird das Rückströmen der Hydraulikflüssigkeit durch den Schaft 20 unterbrochen und die Komponenten werden in die Mischkammer gefördert, indem die Hydraulikflüssigkeit z. B. den Kolben 12 vorschiebt, dabei die Polyolkomponente aus der Verdrängerkammer 8 ausschiebt, die dank des Rückschlagventils 7 ihren Weg über die Zuleitungsabschnitte 3, 4 und die Einspritzöffnung 27 in die Mischkammer nehmen muß. Dort findet die Vermischung mit der durch die Einspritzöffnung 28 eintretenden Isocyanatkomponente statt, und das Reaktionsgemisch wird in ein Formwerkzeug entlassen. Ist die erforderliche Gemischmenge erzeugt worden, so wird das Steuerorgan 26 in die Stellung « Pause » gebracht ; d. h. der Kolben 25 verdrängt den Mischkammerhohlraum und verschließt dabei die Einspritzöffnungen 27, 28. Da der Abstand des Überbrückungskanals 30 zur Kante des Kolbens 25 sowie die Abstande der Einspritzöffnungen 27, 28 zu den Mündungen der Rücklaufleitungsabschnitte 16, 29, 33 genau aufeinander abgestimmt sind, wird exakt mit dem Verschließen der Einspritzöffnungen 27, 28 der Rücklauf der Hydraulikflüssigkeit freigegeben. Befindet sich noch genügend viel von den Reaktionskomponenten in den Verdrängerkammern, so beginnt der nächste Arbeitsgang mit erneuter Umstellung des Steuerorgans 25 auf « Mischen ». Ist die Verdrängerkammer nicht mehr ausreichend gefüllt, so muß der anfangs beschriebene Füllvorgang zwischengeschoben werden.

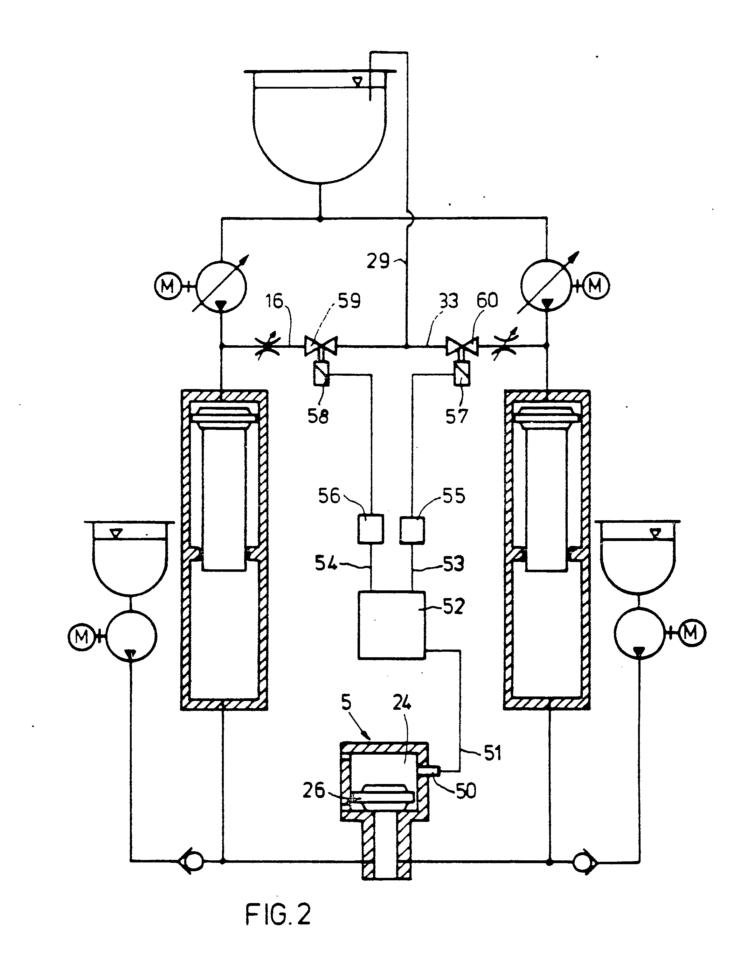

Die Vorrichtung gemäß Fig. 2 entspricht im Aufbau und Arbeitsweise im wesentlichen derjenigen gemäß Fig. 1, so daß sich die Diskussion auf die unterschiedlichen Teile beschränken kann. Deshalb werden, soweit möglich, für identische Teile die Bezugszeichen aus Fig. 1 übernommen.

Das Steuerorgan 26 des Mischkopfes 5 besitzt keine rückwärtige Verlängerung, sondern in die Hydraulikkammer 24 weist ein berührungslos schaltender elektronischer Annäherungsschalter 50 hinein. Eine Impulsleitung 51 verbindet ihn mit einem Impulsumsetzer 52. Impulsleitungen 53, 54 führen über Zeitverzögerungsglieder 55, 56 zu Steuergliedern 57, 58 der Absperrorgane 59, 60, die in den Rücklaufleitungen 16, 33 angeordnet sind.

An sich überflüssigerweise enthält nicht nur eine, sondern jede der Impulsleitungen 53, 54 ein Zeitverzögerungsglied 55, 56. Damit werden aber dem Bedienungspersonal mehr Variations- und Korrekturmöglichkeiten eingeräumt.

Will man überhaupt auf die Möglichkeit einer Korrektur der Eintrittszeitpunkte der Reaktionskomponente verzichten, so genügt es, wenn ein einziges Absperrorgan im gemeinsamen Abschnitt 29 der Rücklaufleitung angeordnet ist, dessen Steuerglied ohne Zwischenschaltung eines Zeitverzögerungsgliedes mit dem Impulsumsetzer 52 über eine Impulsleitung verbunden ist.

Die von der Vorrichtung gemäß Fig. 1 abweichende Arbeitsweise der Vorrichtung gemäß Fig. 2 ist folgende :

Wird das Steuerorgan 26 auf « Mischen » geschaltet, so empfängt der Annäherungsschalter 50 das Signal und gibt den Schaltimpuls über die Impulsleitung 51 an den Impulsumsetzer 52. Dieser gibt den Impuls sofort als Schaltbefehl über die Impulsleitungen 53, 54 an die Zeitverzögerungsglieder 55, 56 weiter, von denen das Glied 55 dem Dosiersystem für die hochviskose, füllstoffhaltige Komponente zugeordnet ist. Es ist auf den Wert « Null » eingestellt, läßt also den Schaltbefehl ohne Verzögerung durch zum Steuerglied 57, das schlagartig das Absperrorgan 60 schließt. Das Zeitverzögerungsglied 56 für das Dosiersystem der geringer viskosen Komponente verzögert den Schaltbefehl um 0,05 Sekunden, bevor es ihn an das Steuerglied 58 des Absperrorgans 59 weitergibt, das gegenüber dem Absperrorgan 60 um das besagte Zeitintervall später schließt. Dadurch wird bewirkt, daß die trägere, höher viskose Komponente und die schneller beschleunigbare, geringer viskose Komponente gleichzeitig in die Mischkammer einspritzen.

Schaltet das Steuerorgan 26 auf « Pausenstellung », so erhält der Annäherungsschalter 50 auch diesen Impuls und gibt ihn weiter, so daß die erneute Umsteuerung der Absperrorgane 59, 60 analog abläuft.

## Patentansprüche

1. Verfahren zum Herstellen von Artikeln, die aus füllstoffhaltigem Chemiewerkstoff bestehen, wobei fließfähige Reaktionskomponenten unter vorgegebenen Injektionsdrücken in eine Mischzone injiziert werden und das Reaktionsgemisch anschließend in ein Formwerkzeug eingebracht wird, dadurch gekennzeichnet, daß mindestens eine der Reaktionskomponenten vorher mit Füllstoff beladen und in einer für mehrere Formwerkzeugfüllungen ausreichenden Menge zwischengelagert wird und dabei auf diese zwischengelagerte Menge auch während der Pausenzeiten, in denen keine Vermischung stattfindet, ein dem Injektionsdruck entsprechender Druck ausgeübt wird, wobei dieser Druck mittels einer Hydraulikflüssigkeit aufgebracht wird, deren Strom synchron mit dem Eintrittszeitpunkt und Absperrzeitpunkt der Reaktionskomponente in die Mischzone gesteuert wird, indem der Hydraulikflüssigkeitsstrom kontinuierlich erzeugt und sein Druck dauernd auf die füllstoffhaltige Reaktionskomponente einwirken gelassen wird und diese während der Mischzeiten in die Mischzone fördert ; und indem während der Pausenzeiten vom Absperrzeitpunkt bis zum Eintrittszeitpunkt der füllstoffhaltigen Reaktionskomponente in die Mischzone, der erzeugte Hydraulikflüssigkeitsstrom rückgeführt wird.

2. Vorrichtung zur Durchführung des Verfahrens nach Anspruch 1, bestehend aus Vorratsbehältern (1) für Reaktionskomponenten, von denen Dosierpumpen (9) enthaltende Zuleitungen (3, 4, 31) über von einem Steuerorgan (26) kontrollierbare Einspritzöffnungen (27, 28) in die Mischkammer eines Mischkopfes (5) münden, an deren Auslaßöffnung ein Formwerkzeug anschließbar ist ; wobei mindestens die in der Zuleitung (3, 4, 31) für die füllstoffhaltige Reaktionskomponente angeordnete Dosierpumpe (9) als hydraulische Kolben-Zylinder-Einheit (8, 10, 11, 12) ausgebildet ist, in deren Verdrängerkammer (8) der vom Vorratsbehälter (1) kommende Abschnitt (2, 3) der Zuleitung mündet und von der ein zweiter Abschnitt (3, 4, 31) der Zuleitung zur Einspritzöffnung (27, 28) der Mischkammer abführt ; und wobei der Kolben (12) de Kolben-Zylinder-Einheit (8, 10, 11, 12) in einer Hydraulikkammer (11) geführt ist, in die eine von einem Vorratsbehälter (13) abführende Hydraulikzuleitung (15, 32), in der eine Dosierpumpe (14) angeordnet ist, mündet, dadurch gekennzeichnet, daß von der Hydraulikzuleitung (15, 32) zwischen Dosierpumpe (14) und Hydraulikkammer (11) eine Rücklaufleitung (16, 33), die ein Drosselventil (17) enthält, abzweigt und zum Vorratsbehälter (13) zurückführt, wobei die Rücklaufleitung (16, 29, 33) ein Absperrorgan (20 ; 59, 60) aufweist, das mit dem Steuerorgan (26) über eine Zwangssteuerung (30 ; 50, 51, 52, 53, 54, 57, 58) verbunden ist.

3. Vorrichtung nach Anspruch 2, dadurch gekennzeichnet, daß als Zwangssteuerung (30) das Absperrorgan (20) vom Steuerorgan (26) gebildet ist, indem das Steuerorgan (26) aus einem Gehäuse (18) mit darin geführtem Kolben (25) besteht, wobei der Kolben (25) der Steuerung der Einspritzöffnungen (27, 28) dient, während sein Schaft (20) einen Überbrückungskanal (30) aufweist, mittels dem die durch das Gehäuse (18) hindurchgeführte Rücklaufleitung (16, 29, 33) verbindbar bzw. unterbrechbar ist.

4. Vorrichtung nach Anspruch 2, dadurch gekennzeichnet, daß ein gesondertes Absperrorgan (59, 60) in der Rücklaufleitung (16, 29, 33) angeordnet ist, und daß als Zwangssteuerung dem Steuerorgan (26) ein elektronischer Annäherungsschalter (50) zugeordnet ist, der mit einem Impulsumsetzer (52) verbunden ist, der mit einem Steuerglied (57, 58) des Absperrorgans (59, 60) in Verbindung steht.

5. Vorrichtung nach Anspruch 4, dadurch gekennzeichnet, daß zwischen Impulsumsetzer (52) und Steuerglied (57, 58) ein Zeitverzögerungsglied (55, 56) angeordnet ist.


**Claims**

1. Process for the production of articles consisting of a filler-containing chemical material, in which flowable reaction components are injected into a mixing zone under predetermined injection pressures and the reaction mixture is then introduced into a mould, characterised in that at least one of the reaction components is previously charged with a filler and is intermediately stored in a quantity which is sufficient for several mould fillings and a pressure corresponding to the injection pressure is applied to this intermediately stored quantity even during the pause periods in which no mixing takes place, this pressure being applied by means of a hydraulic fluid whose flow is controlled synchronously with the points in time at which the reaction component enters and is stopped from entering the mixing zone, in such a manner that the flow of the hydraulic fluid is produced continuously and its pressure is allowed to act constantly on the filler-containing reaction component and conveys the latter into the mixing zone during the mixing periods ; and in such a manner that during the pause periods from the point in time at which the filler-containing reaction component is stopped from entering the mixing zone until that at which it enters the latter the flow of hydraulic fluid produced is recycled.

2. Apparatus for carrying out the process according to Claim 1, consisting of supply containers (1) for reaction components, from which pipes (3, 4, 31) containing metering pumps (9) merge, via injection openings (27, 28) which can be monitored by a control element (26), into the mixing chamber of a mixing head (5), to the discharge opening of which a mould can be attached ; wherein at least the metering pump (9) arranged in the pipe (3, 4, 31) for the filler-containing reaction component is designed as a hydraulic piston cylinder unit (8, 10, 11, 12) into whose displacement chamber (8) the section (2, 3) of the pipe coming from the supply container (1) merges and from which a second section (3, 4, 31) of the pipe leads off to the injection opening (27, 28) of the mixing chamber ; and wherein the piston (12) of the piston cylinder unit (8, 10, 11, 12) is guided in a hydraulic chamber (11) into which a hydraulic pipe (15, 32), which leads from a supply container (13) and in which a metering pump (14) is arranged, merges, characterised in that a return pipe (16, 33) containing a throttle valve (17) branches from the hydraulic pipe (15, 32) between the metering pump (14) and the hydraulic chamber (11) and leads back to the supply container (13), the return pipe (16, 29, 33) having a blocking element (20 ; 59, 60) which is connected to the control element (26) via a forced control means (30 ; 50, 51, 52, 53, 54, 57, 58).

3. Apparatus according to Claim 2, characterised in that the blocking element (20) is formed by the control element (26) as the forced control means (30), in such a manner that the control element (26) consists of a housing (18) with a piston (25) guided in it, the piston (25) serving to control the injection openings (27, 28) while its shaft (20) has a bridging duct (30) by means of which the return pipe (16, 29, 33) passed through the housing (18) can be connected or interrupted.

4. Apparatus according to Claim 2, characterised in that a separate blocking element (59, 60) is arranged in the return pipe (16, 29, 33) and that the control element (26) is provided with an electronic proximity switch (50) as the forced control means, which is connected to a pulse converter (52) which communicates with a control member (57, 58) of the blocking element (59, 60).

5. Apparatus according to Claim 4, characterised in that a time delay member (55, 56) is arranged between the pulse converter (52) and the control member (57, 58).


**Revendications**

1. Procédé pour la production d'articles dans un matériau chimique chargé, des constituants réactifs fluides étant injectés dans une zone de mélangeage sous des pressions prédéterminées et le mélange réactionnel étant ensuite introduit dans un moule, procédé caractérisé par le fait qu'au moins l'un des constituants réactifs est préalablement chargé et stocké provisoirement en une quantité suffisante pour plusieurs charges de moules, une pression correspondant à la pression d'injection étant exercée sur cette quantité stockée provisoirement, même pendant les temps de repos où il n'y a pas de mélangeage, cette pression étant exercée au moyen d'un liquide hydraulique dont le flux est commandé en synchronisme avec les instants d'entrée et d'arrêt du constituant réactif dans la zone de mélangeage, ce flux de liquide hydraulique étant produit continûment et sa pression agissant en permanence sur le constituant réactif chargé et transportant ce dernier à la zone de mélangeage pendant les temps de mélangeage ; et le flux de liquide hydraulique produit est renvoyé pendant les temps de repos, entre l'instant d'arrêt et l'instant d'entrée du constituant réactif chargé dans la zone de mélangeage.

2. Dispositif pour la mise en œuvre du procédé selon la revendication 1, consistant en des réservoirs (1) de constituants réactifs, d'où partent des canalisations (3, 4, 31) qui comportent des pompes doseuses (9) et débouchent, par des orifices d'injection (27, 28) contrôlables par un organe de commande (26), dans la chambre de mélangeage d'une tête mélangeuse (5), à l'orifice de sortie de laquelle un moule peut être relié ; au moins la pompe doseuse (9), disposée dans la canalisation (3, 4, 31) du constituant réactif chargé, étant réalisée sous la forme d'un vérin hydraulique (8, 10, 11, 12) dans la chambre de refoulement (8) duquel débouche le tronçon (2, 3) de la canalisation provenant du réservoir (1), et duquel part un second tronçon (3, 4, 31) de la canalisation vers l'orifice d'injection (27, 28) de la chambre de mélangeage ; et le piston (12) du vérin (8, 10, 11, 12) étant guidé dans une chambre hydraulique (11) dans laquelle débouche une canalisation hydraulique (15, 32) qui part d'un réservoir (13) et dans laquelle se trouve une pompe doseuse (14), dispositif caractérisé par le fait qu'une canalisation de retour (16, 33) présentant un étrangleur (17) est en dérivation sur la canalisation hydraulique (15, 32), entre la pompe doseuse (14) et la chambre hydraulique (11), et retourne au réservoir (13), la canalisation de retour (16, 29, 33) comportant un organe d'isolement (20 ; 59, 60) relié à l'organe de commande (26) par l'intermédiaire d'une commande forcée (30 ; 50, 51, 52, 53, 54, 57, 58).

3. Dispositif selon la revendication 2, caractérisé par le fait que la commande forcée (30) de l'organe d'isolement (20) est formée par l'organe de commande (26), cet organe de commande (26) étant constitué par un corps (18) dans lequel est guidé un piston (25), ce piston (25) servant à commander les orifices d'injection (27, 28), tandis que sa tige (20) présente un canal de pontage (30) qui permet d'établir ou d'interrompre la liaison de la canalisation de retour (16, 29, 33) traversant le corps (18).

4. Dispositif selon la revendication 2, caractérisé par le fait qu'un organe d'isolement (59, 60) distinct est incorporé dans la canalisation de retour (16, 29, 33) ; et par le fait que la commande forcée est constituée par un interrupteur de proximité électronique (50) qui est affecté à l'organe de commande (26), et est raccordé à un convertisseur d'impulsion (52) relié à un organe de commande (57, 58) de l'organe d'isolement (59, 60).

5. Dispositif selon la revendication 4, caractérisé par le fait qu'un élément de retard (55, 56) est intercalé entre le convertisseur d'impulsion (52) et l'organe de commande (57, 58).

FIG. 1

FIG.2